# EUROPÄISCHE PATENTSCHRIFT

(11) **EP 2 459 105 B1**
(45) Veröffentlichungstag und Bekanntmachung des Hinweises auf die Patenterteilung: **26.06.2013**
(21) Anmeldenummer: 10737842.4
(22) Anmeldetag: 19.07.2010
(51) Int. Cl.: A61C 7/12, A61C 7/28

(54) **SELBSTLIGIERENDES BRACKET**
SELF-LIGATING BRACKET
ATTACHE ORTHODONTIQUE AUTO-LIGATURANTE

(30) Priorität: 31.07.2009 CH 12032009
(43) Veröffentlichungstag der Anmeldung: 06.06.2012
(73) Patentinhaber: Eichenberg, Tena, 89231 Neu-Ulm (DE)
(72) Erfinder: Eichenberg, Tena, 89231 Neu-Ulm (DE)
(74) Vertreter: Rasch, Michael
(86) Internationale Anmeldenummer: PCT/EP2010/060427
(87) Internationale Veröffentlichungsnummer: WO 2011/012486

(56) Entgegenhaltungen:
- EP-A1- 1 754 450
- US-A- 5 174 753
- US-B2- 6 663 385

## Beschreibung

Die vorliegende Erfindung betrifft ein selbstligierendes Bracket und einen darin aufzunehmenden Drahtbogen aus einer Nickeltitanlegierung, mit einer Halteplatte und mindestens einem Paar voneinander beabstandeten, damit einstückig verbundenen Halteflügeln, zwischen denen der Drahtbogen einschnappend gehalten ist, und dass das mindestens eine Halteflügelpaar einen Zwischenraum definiert, der sich in Längsrichtung des Drahtbogens erstreckt, wobei der Querschnitt des Zwischenraumes eine Trapezform aufweist, und die Halteflügel an den der Halteplatte abgelegenen Enden Zungen aufweisen.

Ursprünglich wurden Brackets für die Zahnpositionsregulierung aus relativ starrem Material gefertigt und der Drahtbogen, welcher im Bracket verläuft, mit Ligaturen befestigt. Später wurden die selbstligierenden Brackets entwickelt, bei denen der Drahtbogen (Archwire) mit einer Feder oder einem Schloss (Clip) im Bracket fixiert wurde, um dadurch die zeitaufwendigen Ligaturen weitgehend zu meiden.

Seit einigen Jahren werden selbstligierende Brackets auch aus elastischen Materialien erwähnt, die es erlauben einen Drahtbogen einschnappend zwischen einem oder mehreren Paaren von Halteflügeln hineinzudrücken, so dass der Drahtbogen im Bracket gehalten ist.

Bei den verwendeten elastischen Materialien wurden sowohl Kunststoffe als auch Formgedächtnislegierungen (z.B. aus Nickeltitan) vorgeschlagen. Gerade das letztgenannte Material ist in der Orthodentaltechnik stark verbreitet, da sehr häufig der Archwire aus Nickeltitanlegierung mit superelastischem Verhalten oder Memory-Effekt gefertigt ist.

Die Genauigkeit und damit der Erfolg der orthodontischen Therapie hängt u.a. von der Führung des orthodontischen Bogens im Slot des Brackets ab. Hierbei ist eine möglichst spielfreie Passung anzustreben, wenngleich ein zu enger Sitz zu erhöhter Friktion zwischen Slot und Bogen und damit zu einer Verlangsamung der Zahnbewegung führt.

Bereits aus dem Dokument US-5356289 A ist ein orthodontisches Bracket bekannt, welches aus einer Nickeltitanlegierung mit Memory-Effekt oder aus Kunststoff gefertigt ist, wobei zwei Halteflügelpaare vorhanden sind, zwischen denen ein im Querschnitt rechteckiger Archwire einschnappend einbringbar ist. Der Querschnitt des Zwischenraumes zwischen den Halteflügeln ist im Wesentlichen ebenfalls rechteckig. Zwangsläufig muss der Zwischenraum zwischen den beiden Halteflügeln grösser sein als der Querschnitt des Archwires. Der Drahtbogen liegt somit mit Spiel zwischen den Halteflügeln, was zu einer verminderten Genauigkeit der Zahnbewegung und damit zu einem schlechteren Behandlungsergebnis führt. Würde der Drahtbogen exakt der Form des Zwischenraumes zwischen den Halteflügeln entsprechen, so würde der Drahtbogen zwar spielfrei gehalten sein, doch dies ist in Realität nicht machbar, ohne dabei gleichzeitig die Formgebung des Drahtbogens zu behindern.

Den genau gleichen gedanklichen Fehler weist auch die Lösung gemäss dem Dokument US 6663385 B auf. Im Wesentlichen entspricht die hier gezeigte Lösung der zuvor diskutierten Ausführungsform jedoch sind hier die beiden Halteflügel über die gesamte Länge der Halteplatten erstreckend gestaltet. Um die Flexibilität der Halteflügel zu erhöhen, sind Längsrillen im Bereich der Halteplatte an den Flügeln vorgesehen, die eine scharnierartige Wirkung haben sollen. Die Problematik ist aber dieselbe. Der Drahtbogen verläuft keineswegs exakt gerade und entsprechend ist eine formschlüssige Einpassung, wie dies hier sowohl bezüglich der im Querschnitt rechteckigen Drahtbögen als auch bei runden Drahtbögen gezeigt ist, nicht realisierbar. Letztlich zeigt aber dieses Dokument auch eine Variante in der Figur 19 bei dem der Zwischenraum zwischen den beiden Halteflügeln eine trapezförmige Gestalt hat. Die Basis des Trapezes verläuft dabei fluchtend mit der Oberfläche der Halteplatte. Ansonsten entspricht diese Ausführungsform, wie in der Figur 19 dargestellt, dem nächstliegenden Stand der Technik der vorliegenden Erfindung, wie eingangs definiert, wobei hier die Konizität der Dicke der Halteflügel die zuvor erwähnten Längsrillen ersetzen sollen, welche die scharnierartige Funktion bewirken. Entsprechend wird derselbe im Querschnitt rechtwinklige Archwire verwendet. Etwas anderes als die gewünschte formschlüssige Aufnahme wird auch hier nicht offenbart.

Eine nochmals leicht geänderte Version eines selbstligierenden Brackets zeigt die WO 2006/014378. Bei dieser Lösung wird ein runder Archwire verwendet und die Zungen sind nach aussen hin verlängert, um ein Herausnehmen des Archwires zu ermöglichen. Dies ist aber nach diesseitiger Auffassung nicht erforderlich, da der Archwire üblicherweise nicht wiederverwendet wird und somit einfacher durch Durchtrennung in seiner Längsrichtung herausgezogen werden kann.

Die vorliegende Erfindung hat sich zur Aufgabe gestellt, ein Bracket und einen Drahtbogen, der formlich entsprechend angepasst ist, zu realisieren, der nach dem Einschnappen sich selbst ausrichtet und zu einer spielfreien Lagerung führt. Diese Aufgabe löst ein Bracket und ein Drahtbogen gemäss dem Oberbegriff des Patentanspruches 1, welches die kennzeichnenden Merkmale des Patentanspruches 1 aufweisen.

In der Zeichnung ist ein bevorzugtes Ausführungsbeispiel des Erfindungsgegenstandes dargestellt und anhand der nachfolgenden Beschreibung mit Bezug auf die beigefügte Zeichnung beschrieben. Es zeigt:
- Figur 1: eine Seitenansicht des erfindungsgemässen Brackets mit dem dazugehörenden Drahtbogen eingelegt im Bracket und

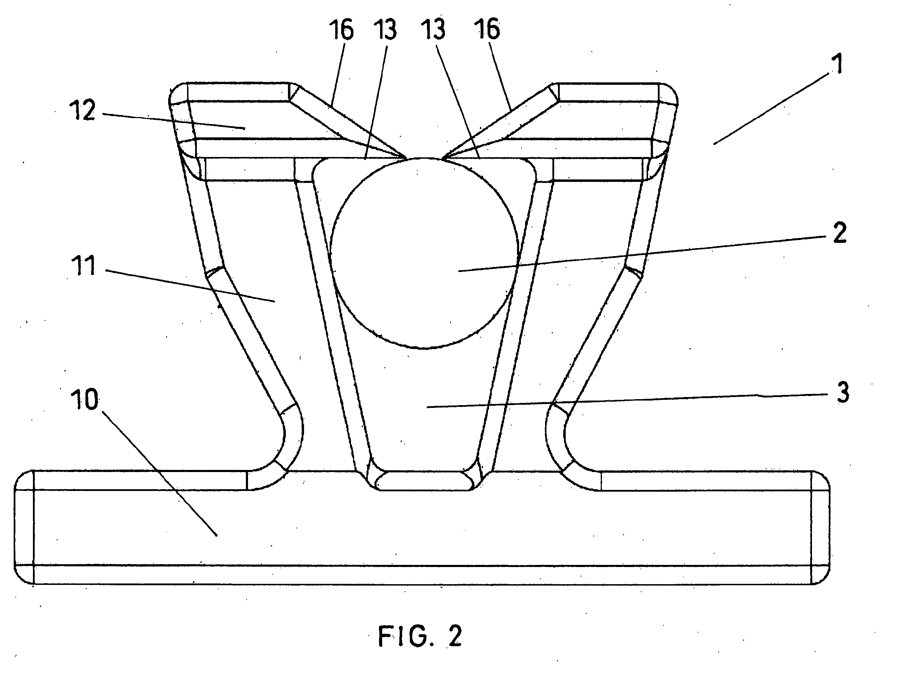

- Figur 2: dieselbe Ansicht desselben Brackets mit konventionellen Archwire mit rundem Querschnitt
- Figur 3: zeigt einen Querschnitt durch einen bevorzugten Drahtbogen zur Verwendung mit Brackets gemäss der Erfindung.
- Figur 4: zeigt eine perspektivische Darstellung des Brackets gemäss der vorliegender Erfindung mit eingelegten runden Guidewire.
- Figur 5: dieselbe Darstellung mit einem trapezförmigen, eingelegten Drahtbogen.

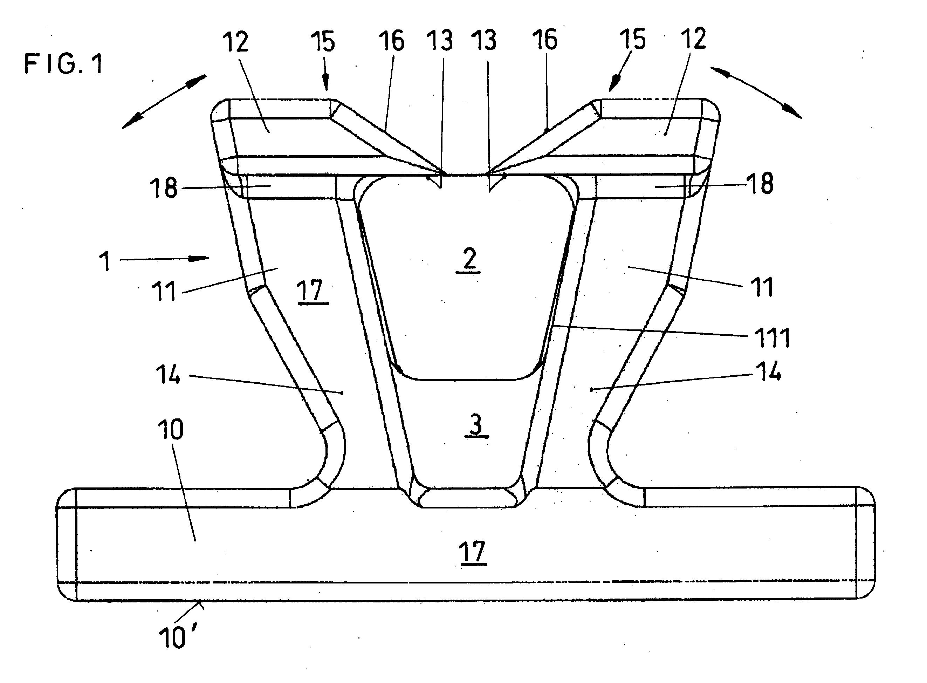

Eine bevorzugte Ausführungsform des erfindungsgemässen Brackets 1 ist in der Figur 1 in einer stirnseitigen Ansicht dargestellt. Mit 10 ist die Halteplatte bezeichnet, die eine Klebefläche aufweist zur Anbringung auf einem Zahn. Hierbei kann dasselbe Bracket sowohl bukkal als auch lingual angeordnet werden. Die Klebefläche der Halteplatte 10 ist mit 10' bezeichnet. In dieser Ansicht ist die Breitseite der Halteplatte 10 ersichtlich, während die Längsseite senkrecht zur Zeichnungsebene verläuft. Auf der Oberfläche der Halteplatte 10 sind voneinander distanziert zwei Halteflügel 11 angeformt, die im wesentlichen spiegelsymmetrisch zur Längsmittenachse verlaufen. Die Halteflügel 11 verlaufen im Wesentlichen von der mittigen Längsachse aus gesehen leicht geneigt nach aussen und enden in Zungen 12. Diese endständig an den Halteflügeln 11 angeformten Zungen 12 besitzen auf der unteren Seite Rückhalteflächen 13, die im Wesentlichen parallel mit der Oberfläche der Halteplatte 10 verlaufen. Die Halteflügel 11 besitzen einen ersten, zunehmenden Abschnitt 14, in dem die Dicke der Flügel im Querschnitt, vom Bereich nahe der Halteplatte 10 in Richtung zu den Zungen 12, zunehmend sind. Der diesem Abschnitt anschliessende Bereich bis hin zu den Zungen 12 bildet einen zweiten Abschnitt, dessen Querschnittsfläche gleichbleibend ist.

Die Zungen 12 haben neben den zur Halteplatte 10 hingerichteten bereits erwähnten Rückhalteflächen 13 obere Seiten 15. Diese Seiten 15 weisen von der Oberseite zu den Rückhalteflächen hin verlaufende Einführungsrampen 16 auf. Diese Einführungsrampen 16 lassen es zu, dass ein runder Drahtbogen 2 oder ein im Querschnitt trapezförmiger Drahtbogen, der mit seiner schmalen Deckfläche 12 in diesem Bereich der Einführungsrampen liegt, einfach durch Druck auf den Drahtbogen 2 die Halteflügel 11 elastisch nach aussen verformen kann und somit einschnappend in den Zwischenraum 3 zwischen den beiden Halteflügeln 11 gelangt. Die Halteflügel 11 haben innere Seitenwände 111, die praktisch als Gleitrampen wirken und bei der elastischen Rückformung der Halteflügel 11 den Drahtbogen 2 in eine definierte obere Position gleitend zu schieben vermögen. Damit nun der Drahtbogen selbstausrichtend und spielfrei seine Halterung im Zwischenraum 3 des Brackets 1 findet, sind gewisse Bedingungen bezüglich des Drahtbogens 2 zu erfüllen. Der Drahtbogen 2 muss so gestaltet sein, dass dieser in der selbstausrichtenden, spielfreien Lage im Bracket 1 auf je einer Anliegelinie einer inneren Seitenwand 111 jedes Halteflügels 11 anliegt und dabei eine resultierende zu den Zungen 12 hin gerichtete Kraft verbleibt, welche den Drahtbogen 2 in der definierten Lage hält. Hierbei ist in jedem Fall der Drahtbogen 2 in der selbstausrichtenden, spielfreien Haltelage von der Halteplatte 10 distanziert. Der Drahtbogen 2 liegt somit lediglich ausrichtend an den Halteflügeln 11 und kraftschlüssig anliegend an den Zungen 12 an. Diese Bedingung können Drahtbögen mit unterschiedlichen Querschnittsformen erfüllen. Wesentlich ist, dass die Querschnittsform vom Drahtbogen von der Querschnittsform des Zwischenraumes 3 abweicht und im eingelegten Zustand die Halteflügel 11 des Brackets 1 immer eine gewissen Spannung halten. Drahtbögen mit bevorzugten Querschnittsformen sind solche Drahtbögen, die entweder einen runden Querschnitt oder einen trapezförmigen Querschnitt aufweisen, wobei der gleichschenklige, trapezförmige Querschnitt eine Basisfläche aufweist, welche geringfügig grösser ist als der grösste Abstand zwischen den beiden Innenflächen 111 der Halteflügel 11 im entspannten Zustand derselben. Die bevorzugte Durchmessergrösse eines runden Drahtbogens 2 ist in etwa so gross wie ein maximal einschreibbarer Kreis in den Zwischenraum 3 des Brackets 1. Hierbei muss selbstverständlich, um wiederum die gewünschte Spannung zu erzielen, dieser Durchmesser um einige Prozente grösser sein um eine Restspannung der Halteflügel 11 aufrecht zu erhalten. Hierbei wird der Drahtbogen in diesem Falle auch an den spitzen Kanten der Haltezungen 12 beidseitig anliegen. Diese Situation ist in der Figur deutlich ersichtlich dargestellt.

Auch bei selbstligierenden Brackets ist zur Einbeziehung aller erforderlichen Zahnbewegungen oftmals zusätzlich noch das Anbringen von Ligaturen oder Bändern erforderlich. Deshalb ist es sinnvoll, in den Stirnflächen 17, welche senkrecht zur Verlaufsrichtung des Zwischenraumes 3 beidseitig am Bracket 1 vorhanden sind, im Übergangsbereich zwischen den Halteflügeln 11 und den endständigen Zungen 12 eine etwa parallel zu den Rückhalteflächen 13 verlaufende Einkerbung 18 vorzusehen. Diese Einkerbungen 18 verlaufen somit fluchtend zu den Rückhalteflächen 13. Diese Einkerbungen 18 müssen in der Dimensionierung den zu verwendenden Ligaturen oder Gummibändern angepasst sein.

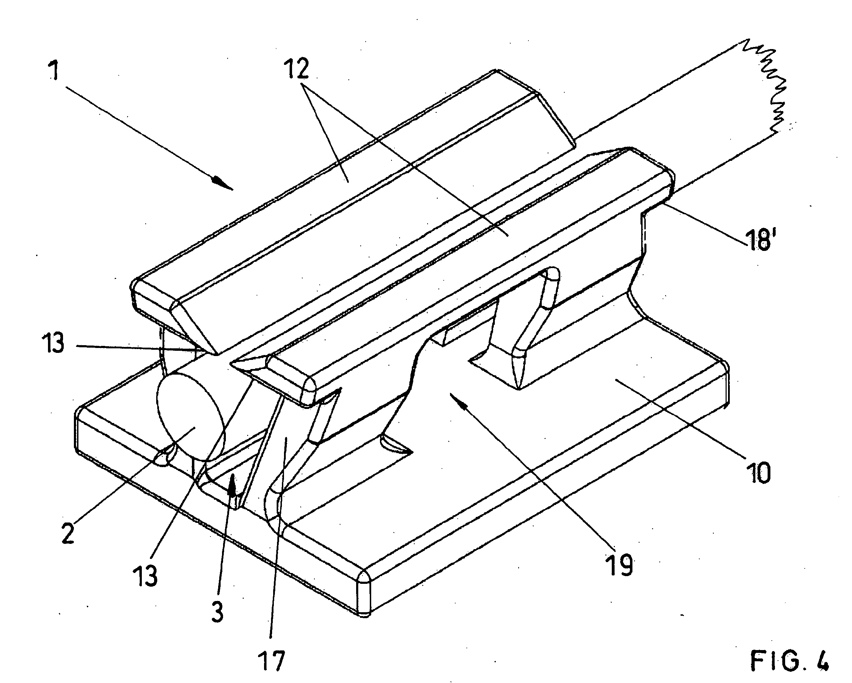

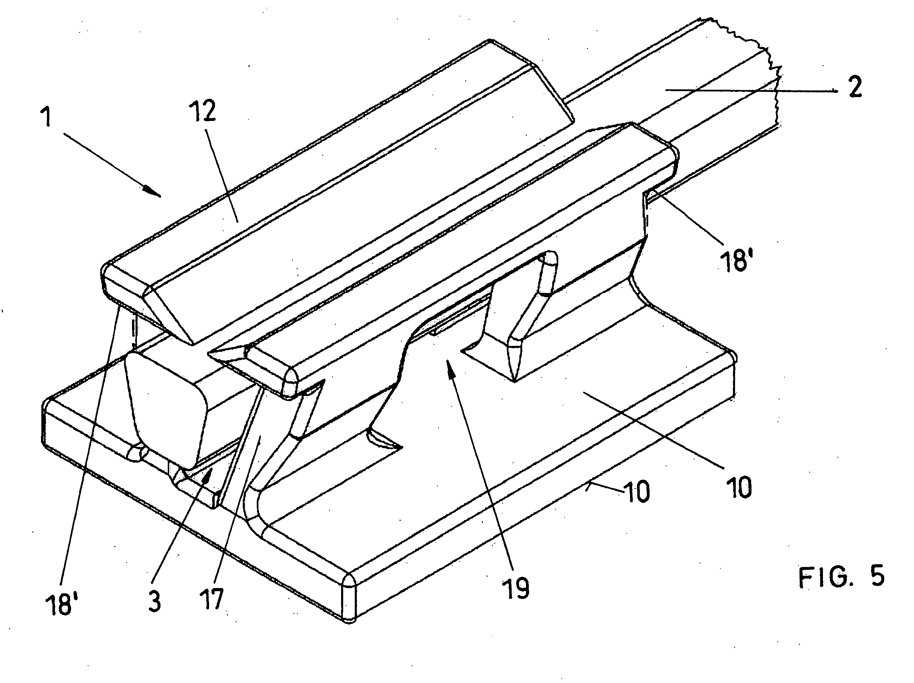

Wie aus den perspektivischen Darstellungen der Figur 4 und Figur 5 ersichtlich, ist es möglich die Einkerbungen 18 dadurch zu erreichen, dass die Stirnflächen 17 der beiden Halteflügel 11 mit einer leichten Neigung von der Halteplatte 10 zu den Zungen 12, so dass die Zungen einen leichten Überstand stirnseitig zu den Halteflügeln 11 aufweisen. Dieser Überstand 18'entspricht nun der Einkerbung 18.

Das erfindungsgemässe Bracket 1 sieht sowohl Lösungen mit mehreren in Verlaufsrichtung des Drahtbogens hintereinander angeordneten Halteflügeln vor, als auch Varianten mit nur einem Paar von über die gesamte Halteplattenlänge sich erstreckenden Halteflügeln.

Sind nur zwei Halteflügel 11 vorhanden, die sich über die gesamte Länge der Halteplatte 10 hinweg erstrecken, so wird man sinnvollerweise in den Halteflügeln 11 fensterartige Durchbrüche 19 anbringen, wie dies in den Figuren deutlich ersichtbar ist. Neben den hier dargestellten Formen von Durchbrüchen oder Einkerbungen kann das erfindungsgemässe Bracket 1 selbstverständlich auch noch andersartig gestaltete Einformungen aufweisen, die der Anbringung einer Ligatur dienlich sind.

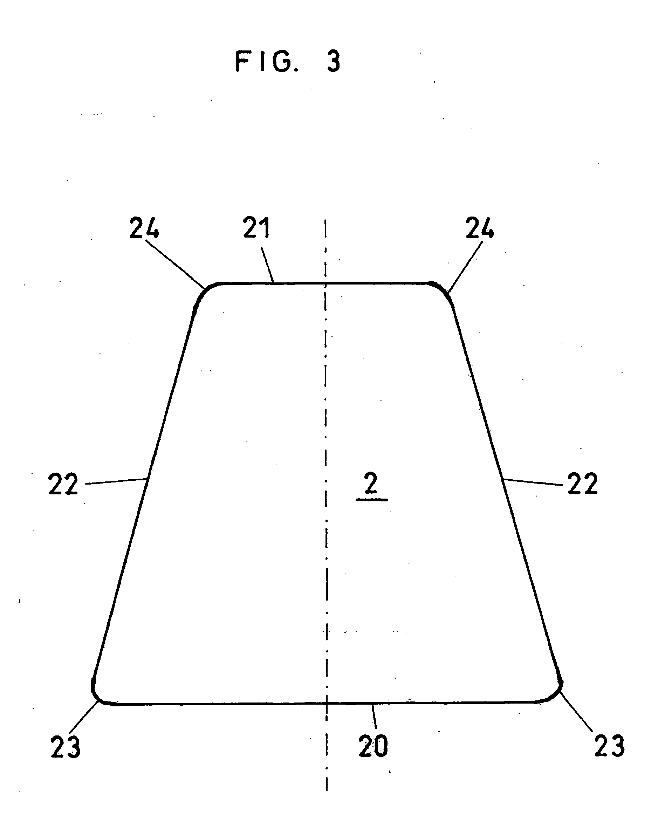

In der Figur 3 ist ein Querschnitt durch eine bevorzugte Ausführungsform eines Drahtbogens gezeigt. Obwohl wie bereits zuvor erwähnt Drahtbögen mit verschiedenen Querschnittsformen in Frage kommen, so lange die die zuvor erwähnten Bedingungen erfüllen, ist jedoch ein Drahtbogen mit einer Querschnittsform in der Gestalt eines gleichschenkligen Trapezes besonders bevorzugt. Bei dieser Variante, die in der Figur 3 dargestellt ist, erkennt man am Drahtbogen eine Deckfläche 21 und eine breitere, dazu parallel verlaufende untere Basisfläche 20. Die Seitenflächen 22 verlaufen somit spiegelsymmetrisch zur mittigen, vertikalen Längsebene. Der Winkel zwischen den Seitenflächen 22 und der Basisfläche 20 ist somit beidseitig spitzwinklig während der entsprechende obere Winkel zwischen der Deckfläche 21 und der Seitenfläche 22 jeweils stumpf ist. Zwischen der Basisfläche 20 und der Seitenfläche 22 verlaufen jeweils Längskanten 23. Die oberen Längskanten 24 verlaufen zwischen der Deckfläche 21 und den Seitenflächen 22. Bevorzugterweise sind diese Längskanten 23 und 24 gerundet gestaltet um das selbstzentrierende Gleiten dieser Kanten entlang den inneren Seitenwände 111 der Halteflügel 11 zu optimieren. Bedingung für eine selbstzentrierende, spielfreie Halterung ist jedoch, dass der spitze Winkel bei der Kante 23 zwischen der Basisfläche 20 und den Seitenwänden 22 kleiner ist als der Winkel den die Rückhaltefläche 13 und die innere Seitenwand 111 der Halteflügel 11 einschliessen. Zwangsläufig ist der Winkel den die beiden Seitenflächen 111 in ihrer Verlängerung miteinander einschliessen grösser als der Winkel den die inneren Seitenwände 111 der Halteflügel 11 zwischen einander ebenfalls in der Verlängerung miteinander einschliessen würden.

Durch die Verwendung von Nickeltitanlegierungen mit einem Memory-Effekt erfolgt beim eindrücken des Drahtbogens, beziehungsweise des Archwires erst eine elastische Rückformung, die wie zuvor beschrieben den Drahtbogen in die gewünschte spielfreie, anliegende Lage drückt, wobei der Archwire an die Rückhalteflächen gedrückt wird, während die Seitenflächen nur geführt sind. Nach einer gewissen Zeit und unter Einfluss der Wärme in der Mundhöhle erfolgt danach eine plastische Rückformung und damit ein relativ sattes anliegen der Halteflügel an den Seitenflächen 22 des Archwires, womit ein relativ sattes Anliegen erwirkt wird, und damit die Friktion zwischen des von den Halteflügeln 11 und den Rückhalteflächen 13 gebildeten Slots und dem Drahtbogen 2 erhöht. Dies führt zu einer Verlangsamung der Zahnbewegung. Dies wird aber in der Dentalorthopädie bevorzugt, da eine nach der Behandlung immer auch auftretende Rückbewegung wesentlich reduziert wird. Derselbe Effekt tritt auch bei Drahtbogen mit rundem Querschnitt auf, da auch hier in geringem Mass die Halteflügel 11 sich mit ihren Flächen 111 an den Draht geringfügig flächig anschmiegen.

Arbeitet man mit einem Drahtbogen (2) (Archwire) mit einem runden Querschnitt, so muss dieser in der Wahl der Grösse ebenfalls auf den Zwischenraum (3) des Brackets (1) angepasst sein. Prinzipiell muss der Durchmesser des Drahtbogens so gross sein, dass die Halteflügel (11) unter Vorspannung den Drahtbogen (2) nach oben schieben, bis dieser an der Unterseite der Zungen (12) anliegt. Dies ist generell dann erfüllt, wenn der Durchmesser des Drahtbogens grösser ist als der Durchmesser des maximalen in den Zwischenraum (3) einschreibbaren Kreises. Selbstverständlich kann der Durchmesser des Drahtbogens nicht beliebig grösser sein als der vorgenannte einschreibbare Kreis. Der Fachmann wird diesen aber aus Erfahrung korrekt bemessen. Prinzipiell genügt es, wenn der Durchmesser nur wenige Prozente grösser ist als der maximale in den Zwischenraum einschreibbare Kreis, insbesondere zwischen 2 und 20%.

Neben den beiden hier dargestellten Ausführungsformen der Archwire beziehungsweise Drahtbogens sind wie bereits erwähnt auch andere Querschnittsformen denkbar. So können beispielsweise auch die Seitenflächen 22 des Drahtbogens 2 leicht bauchig nach aussen geformt sein. Auch ein Archwire mit dreieckiger Form ist denkbar. In diesem Fall ist dann auch der Querschnitt des Zwischenraumes 3 so, dass die Trapezform eine sehr kurze Deckfläche (Grundfläche auf der Halteplatte 10 zwischen den Halteflügeln 11) aufweist.

**Bezugszeichenliste:**

| | |
|---|---|
| 1 | Bracket |
| 2 | Drahtbogen (Archwire) |
| 3 | Zwischenraum |
| 10 | Halteplatte |
| 10' | Klebefläche |
| 11 | Halteflügel |
| 12 | Zungen |
| 13 | Rückhalteflächen |
| 14 | zunehmender Abschnitt der Halteflügel |
| 15 | von Halteplatte abgelegene Seite |
| 16 | Einführungsrampen |
| 17 | Stirnfläche der Brackets |
| 18 | Einkerbung |
| 18' | Überstand |
| 19 | fensterartiger Durchbruch |
| 20 | Basisfläche |
| 21 | Deckfläche |
| 22 | Seitenflächen |
| 23 | Längskanten der Basisfläche |
| 24 | Längskanten der Deckfläche |
| 111 | innere Seitenwand des Halteflügels 11 |

## Patentansprüche

1. Selbstligierendes Bracket (1) und ein darin aufzunehmender Drahtbogen (12) aus einer Nickeltitanlegierung, mit einer Halteplatte (10) und mindestens einem Paar voneinander beabstandeten, damit einstückig verbundenen Halteflügeln (11), zwischen denen der Drahtbogen (2) einschnappend gehalten ist, und das mindestens eine Halteflügelpaar (11) einen Zwischenraum (3) definiert, der sich in Längsrichtung des Drahtbogens (2) erstreckt, wobei der Querschnitt des Zwischenraumes (3) eine Trapezform aufweist, und die Halteflügel (11) an den der Halteplatte (10) abgelegenen Enden, Zungen (12) mit mindestens annähernd parallel zur Halteplatte (10) verlaufende Rückhalteflächen (13) auf der zum Zwischenraum (3) hin gerichteten Seite aufweisen **dadurch gekennzeichnet, dass** der Drahtbogen (2) eine Form aufweist, die von der Trapezform des Zwischenraumes (3) so abweicht, dass die Halteflügel (11), die von der Halteplatte (10) geneigt nach aussen laufend gestaltet sind, den Drahtbogen (2) gleitend von der Halteplatte (10) weg zu den Rückhalteflächen (13) der Zungen (12) zu schieben vermögen, so dass eine selbstausrichtende spielfreie Halterung des Drahtbogens (2) unter Spannung sich im Zwischenraum (3) des Brackets (1) ergibt.

2. Bracket (1) und Drahtbogen (2) nach Anspruch 1, **dadurch gekennzeichnet, dass** der Drahtbogen (2) einen trapezförmigen Querschnitt aufweist.

3. Bracket (1) und Drahtbogen (2) nach Anspruch 1, **dadurch gekennzeichnet, dass** der Drahtbogen (2) einen runden Querschnitt aufweist.

4. Bracket (1) und Drahtbogen (2) nach Anspruch 1, **dadurch gekennzeichnet, dass** der Drahtbogen (2) einen dreieckigen Querschnitt aufweist.

5. Bracket (1) und Drahtbogen (2) nach Anspruch 1, **dadurch gekennzeichnet, dass** der Drahtbogen (2) einen Querschnitt in der Form eines gleichschenkligen Trapezes aufweist, mit einer Basisfläche (20) und einer Deckfläche (21) sowie zwei Seitenflächen (22), wobei die Breite der Basisfläche (20) grösser ist als der maximale Abstand der Halteflügel (11) im Zwischenraum (3).

6. Bracket (1) und Drahtbogen (2) nach Anspruch 2, **dadurch gekennzeichnet dass** die Höhe des trapezförmigen Drahtbogens (2) mindestens um 10% geringer ist als der Abstand zwischen der Halteplatte (10) und der Rückhalteflächen (13) der Flügel (12).

7. Bracket (1) und Drahtbogen (2) nach Anspruch 1, **dadurch gekennzeichnet, dass** der Durchmesser des Drahtbogens (2) grösser ist als der Durchmesser eines in den Zwischenraum (3) einschreibbaren maximalen Kreises im unbelasteten Zustand der Halteflügel (11).

8. Bracket (1) und Drahtbogen (2) nach Anspruch 1, **dadurch gekennzeichnet, dass** die Halteflügel (11) von der Halteplatte (10) zu den Zungen (12) hin mindestens auf einen Abschnitt (14) der Dicke zunehmend gestaltet sind.

9. Bracket (1) und Drahtbogen (2) nach Anspruch 1, **dadurch gekennzeichnet, dass** die Zungen (12) auf der von der Halteplatte (10) abgelegene Seite (15) zum freien Ende hin geneigt verlaufend und so Einführungsrampen (16) bilden.

10. Bracket (1) und Drahtbogen (2) nach Anspruch 1, **dadurch gekennzeichnet, dass** in den senkrecht zur Verlaufsrichtung des Zwischenraumes (3) angeordneten beidseitigen Stirnflächen (17) des Brackets (1) im Übergangsbereich zwischen den Halteflügeln (11) und den endständigen Zungen (12) eine etwa parallel zu den Rückhalteflächen (13) verlaufende Einkerbung (18) vorhanden ist.

11. Bracket (1) und Drahtbogen (2) nach Anspruch 1, **dadurch gekennzeichnet, dass** nur ein Paar Halteflügel (11) vorhanden ist, welches sich über die gesamte Länge der Halteplatte (10) erstreckt.

12. Bracket (1) und Drahtbogen (2) nach Anspruch 8, **dadurch gekennzeichnet, dass** in den beiden Halteflügeln (11) im Bereich zwischen den Zungen (12) und der Halteplatte (10) je ein fensterartiger Durchbruch (19) vorhanden ist.

13. Bracket und Drahtbogen nach Anspruch 1, **dadurch gekennzeichnet, dass** die Stirnflächen (17) der Halteflügel (11) von der Halteplatte (10) zu den Zungen (12) so geneigt verlaufen, dass die Zungen (12) einen Überstand (18') gegenüber den Stirnflächen (17) aufweisen.

## Claims

1. A self-ligating bracket (1) and a wire arch (2) made of a nickel titanium alloy to be accommodated in said bracket, with a retaining plate (10) and, integrally joined thereto, at least one pair of mutually spaced retaining wings (11), between which the wire arch (2) is snapped in place, and the at least one pair of retaining wings (11) defines a gap (3) that extends in the longitudinal direction of the wire arch (2), the cross section of the gap (3) having a trapezoidal shape, and the retaining wings (11) at the ends remote from the retaining plate (10) comprise tongues (12) with retaining surfaces (13) running at least approximately parallel to the retaining plate (10) on the side directed towards the gap (3), **characterised in that** the wire arch (2) has a shape that deviates from the trapezoidal shape of the gap (3) such that the retaining wings (11), which are outwardly inclined from the retaining plate (10), are able to slide the wire arch (2) away from the retaining plate (10) towards the retaining surfaces (13) of the tongues (12), such that the wire arch (2) is mounted in a self-aligning manner without play, under stress, in the gap (3) of the bracket (1).

2. The bracket (1) and wire arch (2) according to Claim 1, **characterised in that** the wire arch (2) has a trapezoidal cross section.

3. The bracket (1) and wire arch (2) according to Claim 1, **characterised in that** the wire arch (2) has a round cross section.

4. The bracket (1) and wire arch (2) according to Claim 1, **characterised in that** the wire arch (2) has a triangular cross section.

5. The bracket (1) and wire arch (2) according to Claim 1, **characterised in that** the wire arch (2) has a cross section in the shape of an isosceles trapezoid, with a base face (20), a top face (21) and two lateral faces (22), the width of the base face (20) being greater than the maximum distance between the retaining wings (11) in the gap (3).

6. The bracket (1) and wire arch (2) according to Claim 2, **characterised in that** the height of the trapezoidal wire arch (2) is at least 10 % lower than the distance between the retaining plate (10) and the retaining surfaces (13) of the wings (12).

7. The bracket (1) and wire arch (2) according to Claim 1, **characterised in that** the diameter of the wire arch (2) is greater than the diameter of a maximum circle inscribable in the gap (3) in the unloaded state of the retaining wings (11).

8. The bracket (1) and wire arch (2) according to Claim 1, **characterised in that** the retaining wings (11) are designed to increase in thickness over at least one portion (14) from the retaining plate (10) towards the tongues (12).

9. The bracket (1) and wire arch (2) according to Claim 1, **characterised in that** the tongues (12) on the side (15) remote from the retaining plate (10) run at an incline towards the free end and thus form insertion ramps (16).

10. The bracket (1) and wire arch (2) according to Claim 1, **characterised in that** an indentation (18) running approximately parallel to the retaining surfaces (13) is provided in the end faces (17) of the bracket (1) arranged on either side perpendicularly with respect to the running direction of the gap (3) in the transition region between the retaining wings (11) and the terminal tongues (12).

11. The bracket (1) and wire arch (2) according to Claim 1, **characterised in that** only one pair of retaining wings (11) is provided and extends over the entire length of the retaining plate (10).

12. The bracket (1) and wire arch (2) according to Claim 8, **characterised in that** a window-like opening (19) is provided in each of the two retaining wings (11) in the region between the tongues (12) and the retaining plate (10).

13. The bracket and wire arch according to Claim 1, **characterised in that** the end faces (17) of the retaining wings (11) are inclined from the retaining plate (10) towards the tongues (12) such that the tongues (12) have a projection (18') relative to the end faces (17).

## Revendications

1. Bague orthodontique (1) autoligaturante et un fil métallique (2) à loger dans cette dernière, en un alliage titane/nickel, avec une plaque de maintien (10) et avec au moins une paire d'ailettes de maintien (11) écartées l'une de l'autre, reliées en monobloc avec celle-ci, entre lesquelles le fil métallique (2) est maintenu par encliquetage et l'au moins une paire d'ailettes de maintien (11) définit un interstice (3) qui s'étend en direction longitudinale du fil métallique (2), la section transversale de l'interstice (3) présentant une forme trapézoïdale et sur les extrémités éloignées de la plaque de maintien (10), les ailettes de maintien (11) présentant des languettes (12) avec des surfaces de retenue (13) s'étendant au moins approximativement à la parallèle de la plaque de maintien (10) sur le côté dirigé vers l'interstice (3), **caractérisés en ce que** le fil métallique (2) présente une forme qui diverge de la forme trapézoïdale de l'interstice (3), de sorte que les ailettes de maintien (11), qui sont conçues en étant inclinées vers l'extérieur à partir de la plaque de maintien (10) soient susceptibles de pousser le fil métallique (2) en coulissement en s'éloignant de la plaque de maintien (10) vers les surfaces de retenue (13) des languettes (12), de sorte à obtenir sous tension dans l'interstice (3) de la bague orthodontique (1) une fixation sans jeu et à auto-orientation du fil métallique (2).

2. Bague orthodontique (1) et fil métallique (2) selon la revendication 1, **caractérisés en ce que** le fil métallique (2) présente une section transversale trapézoïdale.

3. Bague orthodontique (1) et fil métallique (2) selon la revendication 1, **caractérisés en ce que** le fil métallique (2) comporte une section transversale ronde.

4. Bague orthodontique (1) et fil métallique (2) selon la revendication 1, **caractérisés en ce que** le fil métallique (2) comporte une section transversale triangulaire.

5. Bague orthodontique (1) et fil métallique (2) selon la revendication 1, **caractérisés en ce que** le fil métallique (2) comporte une section transversale en forme de trapèze à côtés égaux, avec une surface de base (20) et une face supérieure (21), ainsi que deux surfaces latérales (22), la largeur de la surface de base (20) étant supérieure à l'écart maximal entre les ailettes de maintien (11) dans l'interstice (3).

6. Bague orthodontique (1) et fil métallique (2) selon la revendication 2, **caractérisé en ce que** la hauteur du fil métallique (2) trapézoïdal est inférieure d'au moins 10% à l'écart entre la plaque de maintien (10) et les surfaces de retenue (13) des ailettes (12).

7. Bague orthodontique (1) et fil métallique (2) selon la revendication 1, **caractérisés en ce que** le diamètre du fil métallique (2) est supérieur au diamètre d'un cercle maximal pouvant s'inscrire dans l'interstice (3) à l'état non chargé des ailettes de maintien (11).

8. Bague orthodontique (1) et fil métallique (2) selon la revendication 1, **caractérisés en ce qu'**à partir de la plaque de maintien (10) en direction des languettes (12), les ailettes de maintien (11) sont conçues sur au moins une partie (14) avec une épaisseur croissante.

9. Bague orthodontique (1) et fil métallique (2) selon la revendication 1, **caractérisés en ce que** sur le côté (15) éloigné de la plaque de maintien (10), les languettes (12) s'étendent en inclinaison vers l'extrémité libre et forment ainsi des rampes d'introduction (16).

10. Bague orthodontique (1) et fil métallique (2) selon la revendication 1, **caractérisés en ce que** dans les surfaces frontales (17) bilatérales de la bague orthodontique (1) disposées à la perpendiculaire de la direction d'extension de l'interstice (3), une gorge (18) s'étendant approximativement à la parallèle des surfaces de retenue (13) est présente dans la zone de passage entre les ailettes de retenue (11) et les languettes (12) terminales.

11. Bague orthodontique (1) et fil métallique (2) selon la revendication 1, **caractérisés par** la présence d'une seule paire d'ailettes de maintien (11) qui s'étend sur toute la longueur de la plaque de maintien (10).

12. Bague orthodontique (1) et fil métallique (2) selon la revendication 8, **caractérisés en ce qu'**un ajour (19) de type fenêtre est présent chaque fois dans les deux ailettes de maintien (11), dans la zone entre les languettes (12) et la plaque de maintien (10).

13. Bague orthodontique et fil métallique selon la revendication 1, **caractérisés en ce que** les surfaces frontales (17) des ailettes de maintien (11) s'étendent de la plaque de maintien (10) vers les languettes (12) avec une inclinaison telle, que les languettes (12) sont en porte-à-faux (18') par rapport aux surfaces frontales (17).
